# EUROPÄISCHE PATENTSCHRIFT

(11) **EP 3 915 860 B1**
(45) Veröffentlichungstag und Bekanntmachung des Hinweises auf die Patenterteilung: **18.06.2025**
(21) Anmeldenummer: 21020256.0
(22) Anmeldetag: 14.05.2021
(51) Int. Cl.: B62H 5/06, B62K 19/32, B62K 19/08, B62K 21/08, B62K 21/06

(54) **FAHRRADLENKUNG UNFASSEND EINEN LENKER UND EINE GABEL FÜR EIN FAHRRAD, SOWIE EINEN STABILISATOR**
BICYCLE STEERING ASSEMBLY COMPRISING A HANDLEBAR AND A FORK FOR A BICYCLE AS WELL AS A STABILISATOR
DIRECTION DE BICYCLETTE COMPRENNANT UN GUIDON ET UNE FOURCHE POUR UNE BICYCLETTE, AVEC EN PLUS UN STABILISATEUR

(30) Priorität: 26.05.2020 DE 202020002312 U
(43) Veröffentlichungstag der Anmeldung: 01.12.2021
(73) Patentinhaber: Khadjavi, Armin, 82065 Baierbrunn (DE)
(72) Erfinder: Khadjavi, Armin, 82065 Baierbrunn (DE)

(56) Entgegenhaltungen:
- EP-A1- 1 616 779
- GB-A- 267 303

## Beschreibung

### Erfindungsgebiet

Die Erfindung betrifft Fahrradlenkungen, die mittels eines Stabilisators stabilisiert werden.

### Hintergrund der Erfindung

Der Nachlauf ist der Abstand zwischen dem Projektionspunkt der Lenkachse und dem Kontaktpunkt des Vorderrades auf der Fahrbahn. Eine Fahrradlenkachse entspricht der Achse des Fahrradsteuerohres.

Der Nachlauf wird größer, je flacher der Steuerwinkel, je kleiner die Gabelbiegung und je größer der Laufradradius ist.

Der Fahrradsteuerwinkel ist der Winkel zwischen der Fahrradlenkachse und der Fahrbahn. Die Gabelbiegung einer Fahrradlenkgabel ist die Distanz zwischen der Laufradachse und der Verlängerung der Lenkachse.

Der Laufradradius ist der Radius eines Rades.

Abgesehen von Extremkonstruktionen ist ein Nachlauf von ca. 50 bis 60 mm als günstig anzusehen.

Ein günstiger Nachlaufwert mit einem mittleren Steuerwinkel bewirkt ein ausreichend direktes, gut beherrschbares Lenkverhalten (ca. 70° Lenkachswinkel, ca. 55 mm Nachlauf, bei ca. 1100 mm Radstand). Der Radstand ist der Abstand zwischen den Naben der zwei Räder eines Zweirades.

Ein großer Nachlauf mit tendenziell flacher werdendem Lenkachswinkel führt zu immer träger werdenden Lenkeigenschaften. Eine weitere Einflussgröße für die Lenkeigenschaften sind die Lenkkräfte. Sie nehmen mit größer werdendem Nachlauf zu. In der Praxis spürbar wird dies allerdings erst bei Lenkachswinkel unter ca. 70° in Verbindung mit großen Nachlaufwerten.

Ein kleiner Nachlauf bei tendenziell steiler werdendem Lenkachswinkel bewirkt ein immer direkter werdendes bis hin zum labilen Lenkverhalten (ca. 75° Lenkachswinkel, ca. 50 mm Nachlauf, bei ca. 1000 mm Radstand).

Ein Fahrrad mit einem Rahmen, der solch ein Lenkverhalten verursacht, ist für geübte Amateure und Profis bei Straßenrennen (Ausreißmanöver) geeignet. Wenn Rahmen mit einer solchen Geometrie auch an Freizeitradler verkauft werden, kann es zu Unfällen, wegen des Nicht-Geübt-Seins, führen.

Durch den Nachlauf entsteht bei einem Lenkausschlag ein Drehmoment, das diesem als Rückstellmoment entgegen gerichtet ist. Dadurch lenkt das rollende Rad selbständig zurück zur Geradeausstellung. Ein großer Nachlauf bewirkt guten Geradeauslauf, verursacht jedoch hohe Lenkkräfte. Ein kleiner Nachlauf macht das Fahrrad leichter lenkbar, mit zunehmender Geschwindigkeit wegen geringer Geradeauslaufwirkung allerdings auch instabiler.

Zusätzlich zu der durch den Nachlauf bewirkten Stabilität der Fahrradlenkung kann auch die auf die Fahrradlenkungsgriffe durch das Gewicht des Fahrradfahrers wirkende Kraft in Betracht gezogen werden, deren parallel zur Lenkachse verlaufenden Kraftresultierende auch einen Projektionspunkt auf der Fahrbahn hat. Der Abstand zwischen dem Kontaktpunkt des Vorderrades und dem Projektionspunkt der erwähnten resultierenden Kraft auf der Fahrbahn erzeugt auch ein Drehmoment, das wir hier Griffdrehmoment nennen.

Das Griffdrehmoment kann wie das Nachlaufdrehmoment stabilisierend wirken, wenn die resultierende zur Lenkachse parallel verlaufende auf die Fahrradlenkungsgriffe wirkende Kraft in Fahrrichtung vor der Lenkachse liegt. Der Abstand zwischen dem Kontaktpunkt des Vorderrades und dem Projektionspunkt der resultierenden Gewichtskraft des Fahrers auf der Fahrbahn kann aber auch ohne die theoretische Annahme der Parallelität zur Lenkachse, sondern durch eine wirkliche Kraftresultierende, die von der Fahrtrichtung gesehen viel weiter hinter dem Kontaktpunkt des Vorderrades auf die Fahrbahn projiziert wird, zu einer weiteren Instabilität der Lenkung führen.

Ein Einschlagstopper sorgt bei Fahrrädern dafür, dass beim Abstellen des Fahrrades der Fahrradlenker im Wesentlichen zentriert bleibt. Dieses sorgt beim Abstellen des Fahrrades, besonders mittels eines Doppelständers (auch Mittelständer oder Zweibeinständer genannt), bei dem das Vorderrad vom Boden abgehoben ist, für mehr Stabilität.

In Kombination mit einem gut gefüllten Fahrradkorb, Lenkertasche oder Lenkerkindersitz kann das Fahrrad leicht umfallen, wenn der Fahrradlenker aufgrund des hohen Gewichts umschlägt oder beim Abstellen zu stark eingeschlagen wird.

Aus DE202009007528U1 ist ein Lenkungsdämpfer bzw. ein Einschlagstopper für ein Fahrrad bekannt, der ein an einer Lenkergabel eines Fahrrades verdrehsicher festlegbaren Kupplungsteil und ein in Längsrichtung federnden Zugteil aus Gummi oder einem gummiartigen Kunststoff umfasst. Das Zugteil ist einerseits mit dem Kupplungsteil verbunden und andererseits an einem Rahmenteil eines Zweirades festgelegt.

Der Nachteil solcher Fahrradlenkungsdämpfer ist, dass diese ausgerechnet bei einer Geradeausfahrt, bei der eine große Dämpfung gewünscht wird, die geringste oder gar keine Dämpfung erbringen und die notwendige Kraft für Lenkungsdrehungen immer größer wird, je weiter der Lenker ausgelenkt wird, obwohl bei einer ausgeschlagenen Lenker entweder gar keine und wenn überhaupt eine geringe Dämpfung erwünscht ist.

(https://www.louis.de/produkte/motorrad-lenkungsdaempfer/348, Anzeige 12. Mai 2020) Motorrad-Lenkungsdämpfer funktionieren hydraulisch oder pneumatisch und verhindern Lenkerschlagen.

Dabei werden Fluide durch Blenden gezwängt, die dann einen Strömungswiderstand verursachen. Die Blenden fungieren als Energiewandler, die die Bewegungsenergie der Fluide in Wärmeenergie umwandelt (bzw. vernichten). Die Fluide können Gase oder Flüssigkeiten sein. Je steifer die Rahmen und je extremer die Lenkgeometrie der Motorräder werden, desto größer ist die Gefahr, dass sich bei unbeherrschter Fahrweise Schwingungen im Fahrwerk aufschaukeln. Ein Lenkungsdämpfer unterdrückt genau diese Schwingungen und sorgt für Stabilität bei schneller Fahrt. Der Vorteil eines Motorradlenkungsdämpfers ist die konstante Dämpfung, welche bei einer Geradeausfahrt sich bezahlt macht.

Dieser Art des Dämpfers ist für eine Fahrradanwendung zu groß und zu sperrig, weswegen sich der Motorradlenkungsdämpfer für Fahrräder nicht ernsthaft durchgesetzt hat.

Aus DE202014002521U1, GB267303A, US20180043960A1 und JPH11-129968A sind Lenkungsdämpfer für Fahrräder bekannt, die auf der Reibung zwischen zwei sich unter einer Vorspannung gegeneinander drehenden Flächen basiert sind. Der Nachteil dieser Dämpfer ist, dass sie immer vorhanden sind sowohl bei einer Geradeausfahrt als auch bei einer Fahrt, bei der die Lenkung eingeschlagen ist. Die Tatsache ist jedoch die Dämpfung hauptsächlich bei der Geradeausfahrt benötigt wird. Außerdem können die erwähnten Lenkungsdämpfer nicht gleichzeitig als Einschlagstopper verwendet werden.

Dokument GB267303A zeigt die Präambel des Anspruchs 1.

Die Aufgabe der Erfindung ist daher, einen Stabilisator für eine Fahrradlenkung bereit zu stellen, der bei der Geradeausfahrt (große Geschwindigkeiten) die größte Dämpfung und bei einer Lenkung eine geringe bis gar keine Dämpfung erbringt. Außerdem soll der erfindungsgemäße Stabilisator beim abstellen des Fahrrades als ein Einschlagstopper fungieren.

### Beschreibung

Die Aufgabe wird durch einen erfindungsgemäßen Stabilisator für eine Fahrradlenkung gelöst. Der Stabilisator weist mindesten zwei sich miteinander in Kontakt stehenden Körper auf, die durch eine Federkraft ein widerstehendes Drehmoment gegen eine Auslenkung des vorderen Fahrradrades erzeugen. Das Widerstandrehmoment wird hier als Dämpfung bezeichnet.

Die Besonderheit der Erfindung ist, dass der Fahrradlenkungswinkelbereich, bei dem die Dämpfung greifen soll, vorbestimmt und begrenzt sowie einstellbar sein kann.

Theoretisch kann der Winkelbereich, in dem die Dämpfung stattfindet, auf einen geringen Wert und beinahe Null reduziert werden.

Der erfindungsgemäße Stabilisator für eine Fahrradlenkung umfasst einen ersten Körper mit einer Basisfläche, die eine Vertiefung mit einer Kontaktfläche aufweist, und einen zweiten Körper mit einem Gegenstück, das ein Vorspannmittel aufweist.

Das Gegenstück hat einen Kontaktkörper mit einer Reibfläche die der Kontaktfläche des ersten Körpers zugewandt ist.

Die Kontaktfläche des ersten Körpers und die Reibfläche des Gegenstückes sind unter einer vorbestimmten Vorspannung mindestens teilweise miteinander in Kontakt.

Der erste Körper und der zweite Körper sind zueinander um einer Achse XX koaxial und drehbar gelagert.

Der erste Körper ist sinnvollerweise ringförmig oder als ein Ringsegment ausgebildet und zu dem zweiten Körper koaxial und drehbar angeordnet.

Die Körper können auch ineinander liegende Rotationsflächen haben. Formen wie Zylinder mit jeweils im Wesentlichen geraden, geknickten oder bauchigen (kurvigen) Mäntel sowie konische Mäntel sind möglich.

Obwohl die Körper gegeneinander drehbar sind, kann die geknickte bzw. bauchige Form der Mäntel vorteilhafter Weise einen Zusammenhalt der Körper begünstigen, weil der Knick am Umfang eines Körpers im Knick am Umfang des andern Körpers greift.

Dabei ist einer der Körper am Lenker oder Gabel eines Fahrrades und der andere Körper am Rahmen des Fahrrades befestigt.

Das widerstehende Drehmoment des Stabilisators wirkt hier stabilisierend. Deswegen ist die Existenz der dämpfenden Vorspannung, die durch ein federndes Vorspannmittel erzeugt wird, vor allem bei der Geradeausfahrt wesentlich, weil bei einer Geradeausfahrt die Geschwindigkeit in der Regel höher ist als bei einer Kurvenfahrt, bei der der Lenker ausgelenkt ist. Die unerwünschten Schwingungen sind vor allem bei höheren Geschwindigkeiten bei einer Geradeausfahrt präsent. Daher ist auch wichtig, dass nach einer Lenkung eine geringe oder gar keine Reibkraft zwischen den Beiden Körpern des Stabilisators vorhanden ist.

Deswegen müssen die Körper Wirkflächen aufweisen, die bevorzugter weise nur in der Geradeausstellung des Lenkers gegeneinander eine Federkraft ausüben und bei einer Auslenkung entweder mit einer geringfügigen Reibkraft aufeinander reiben oder gar keinen Kontakt zueinander haben.

Die effektive Federkraft, die als ein Widerstand gegen die Umlenkung des Lenkrades wirkt, ist die seitliche Komponente der Federkraft, die gegen das Herausrücken des Gegenstückes des zweiten Körpers aus der Vertiefung des ersten Körpers wirkt.

Für die Erfüllung dieser Voraussetzung muss ein erster Körper eine Basisfläche mit einer Vertiefung und der zweite Körper ein Gegenstück mit einem Vorspannmittel aufweisen.

Das Vorspannmittel kann eine Feder, z.B. eine Druckfeder oder ein federndes Druckstück sein. Bei der Geradeausfahrt ist das Gegenstück in der Vertiefung eingebracht.

Ohne ein Vorspannmittel z.B. als eine Feder muss ein der zwei Körper als Vorspannmittel fungieren. D.h., mindestens ein Körper muss elastisch sein damit die Erzeugung einer Vorspannung durch den elastischen Körper möglich ist.

Wenn der zweite Körper als ein Vollmaterialkörper mit einer konvexen Erhebung (als ein Gegenstück) ausgebildet ist, kann trotzdem die Erzeugung einer Vorspannung durch einen elastischen Bereich in der Nachbarschaft der konvexen Erhebung erzielt werden.

Um nun die Dämpfung tatsächlich bei der Geradeausfahrt oder bei geringeren Auslenkungen, z.B. ca. ≤ 1°, ≤ 2° , ≤ 3°, ≤ 4°, ≤ 5°, ≤ 6°, ≤ 7°, ≤ 8°, ≤ 9°, oder ≤ 10° wirken zu lassen und bei einer Auslenkung von ≥ 1°, ≥ 2°, ≥ 3°, ≥ 4°, ≥ 5°, ≥ 6°, ≥ 7°, ≥ 8°, ≥ 9°, oder ≥ 10° geringere oder gar keine Dämpfung zu haben, muss die Reibung zwischen dem ersten Körper und dem Gegenstück klein gehalten werden.

Die Reibkraft lässt sich ermitteln durch die Multiplikation der Normalkraft, die durch das Gewicht auf die Fahrbahn wirkt, und dem Reibungsbeiwert zwischen dem Fahrradreifen und der Fahrbahn. Um nun das Dämpfungsmoment zu ermittel wird die Nachlaufstrecke mit der Reibkraft multipliziert.

Bei einem geringen Nachlauf muss das Dämpfungsmoment durch die Vorspannkraft des Vorspannmittels des Stabilisators und einen mittleren Radius berechnet werden, der sich von der Lenkachse bis zur Wirkachse des Vorspannmittels hinzieht. Die Vorbestimmung und die Einstellung des Dämpfungsmoments kann mit einem Vorspannmittel realisiert werden. Die Werte können wie beschrieben gerechnet und / oder experimentell an der Fahrradlenkung vorgenommen werden. Bei der experimentellen Ermittlung werden beispielsweise Gewichte auf die Lenkergriffe angebracht und eine Umlenkungskraft am Fahrradlenker wird durch eine Federwaage gemessen.

Um den Wirkbereich des Dämpfungseffektes noch effektiver und nur für die Geradeausfahrt weiter einzuschränken, darf der Kontaktkörper des Gegenstückes nur teilweise in die Vertiefung des ersten Körper eindringen. Dies kann erzielt werden, in dem der Kontaktkörper des Gegenstückes größer ist als die Öffnung der Vertiefung des ersten Körpers. Sinnvollerweise ist der Rand der Vertiefung gefast oder abgerundet, damit der Kontaktkörper leichter aus der Vertiefung heraus geführt wird. Ein Vorteil der Abrundung ist auch noch, dass der Verschleiß zwischen dem Kontaktkörper und der Vertiefung vermieden werden oder gering gehalten kann.

Der Drehwiderstand hat in diesem Fall sowohl mit Federkraft des Vorspannmittels als auch mit dem Reibungswert der kontaktierenden Körper und Gegenstück zu tun.

Die Reibungskraft im Stabilisator kann durch eine gezielte Auswahl des Reibungsbeiwerts reduziert werden. Dabei kann Metall mit Metall oder Metall mit Kunststoff oder Kunststoff mit Kunststoff gepaart werden. Auch eine Auswahl von Keramik anstelle von Metall oder Kunststoff ist möglich.

Die Materialpaarung muss den reduzierten Reibungswiderstand ermöglichen, womit die eine reibungsfreie Lenkung erreicht werden kann. In der Tabelle 1 sind einige beispielhafte Reibwerte für verschiedene Materialpaarungen angegeben.

**Tabelle 1**

| Metallwerkstoffe | Schmierung | Reibungswert |
|---|---|---|
| Stahl - Stahl | trocken | 0,15 |
| Stahl - Stahl | geschmiert | 0,10 |
| Stahl - Polyamid | trocken | 0,30 |
| Stahl - PTFE | trocken | 0,04 |
| Stahl - PTFE | geschmiert | 0,04 |

Bei niedrigeren Reibungswerten für die Materialpaarungen können auch niedrigere Reibungswiderstände erreicht werden. Der Vorteil eines niedrigeren Reibungswiderstandes ist die Verschleißverringerung zwischen den beteiligten Körpern des Stabilisators. Um den Verschleiß zu verringern oder gar zu vermeiden kann man für das Gegenstück auf kommerziell erhältliche federnde Druckstücke zurückgreifen.

Ein federndes Druckstück ist ein Maschinenbauteil und besteht aus einer Gewindehülse mit innenliegender Feder, die auf eine Kugel druckt.

Die Federkraft ist für den Verwendungszweck ausgelegt. Die Kugel kann aus Kunststoff, Stahl oder Keramik sein.

Noch allgemeiner kann das federnde Druckstück anstatt einer Kugel jede andere Art von Wälzkörper z.B. Rollen, Tonnen, Nadeln oder Kegeln haben.

Um den Verschleiß gering zu halten kann der erste Köper aus Stahl beschaffen sein und der zweite Köper ein federndes Druckstück mit einem Wälzkörper z.B. einer Kugel aus Kunststoff, Stahl oder Keramik haben.

Der erfindungsgemäße Stabilisator umfasst einen ersten Köper mit einer dem zweiten Körper zugewandten Basisfläche, die eine lokale Vertiefung aufweist, und einen zweiten Körper mit einem Gegenstück, in dem ein federndes Druckstück eingebaut ist, dessen Wälzkörper auf die Vertiefung des ersten Körper druckt.

Wenn die Form des Wälzkörper passgenau zu der Form der Vertiefung des ersten Körpers passt, dann ist zwar eine sehr gute Arretierung in der Geradeausfahrt gegeben, aber bei der Initiierung einer Kurverfahrt kann der Lenker nur mit einer großen Kraft umgerissen werden. Deswegen kann die Vertiefung eine flachere Form haben als die des Wälzkörpers des federnden Druckstücks. Oder noch effektiver der Wälzkörper des federnden Druckstückes dringt nur teilweise in die Vertiefung des ersten Körpers.

Die Vertiefung im Vorsprung der Reibungsfläche des ersten Körpers kombiniert mit der konvexen Erhebung oder mit dem federnden Druckstück des zweiten Körpers macht es möglich den Fahrradlenker stabil in der Stellung für die Geradeausfahrt zu halten, so dass der erfindungsgemäße Stabilisator sowohl als ein Dämpfer für die Geradeausfahrt als auch ein Einschlagstopper für den Fall wenn dass Fahrrad abgestellt wird, verwendet werden kann. Die Vorspannung kann für die Funktion ''Einschlagstopper" erhöht oder gar zu einem Maximalwert erhöht werden. Dies geschieht beispielsweise mittels einer Schraubverstellung, Keilverstellung oder Exzenterverstellung. Ein Exzenterring kann verwendet werden, um das Gegenstück und den ersten Körper zusammen zu klemmen und dabei den Stabilisator zu einem Einschlagstopper zu verwandeln.

Für die Gewährleitung der passenden Dämpfungskraft ist es wesentlich, eine passende Vorspannkraft für das Zusammendrucken des Gegenstückes mit dem ersten Körper einzustellen.

Die Vorspannkraft kann durch die Bestimmung des Abstandes zwischen dem Gegenstück und dem ersten Körper variiert werden. Beispielsweise kann das Gegenstück an der Verbindungsstelle zum Lenker oder Rahmen des Fahrrades mittel eines Verstellungsmittels zu dem ersten Körper näher verstellt werden. Beispielhafte Verstellmöglichkeiten sind Keil-, Exzenter- und Schraubenverstellung.

Bei einer Keilverstellung wird mit Hilfe eines Verstellmittels bzw. eines Schiebemittels z.B. einer Schraube ein Keil zwischen dem zu verstellenden Teil und einer fixen Basis hin und her geschoben und somit eine Abstandsverstellung bewirkt.

Ähnlich wirk auch eine Exzenterverstellung, wobei mit Hilfe eines Verstellmittels bzw. eines Drehmittels z.B. einer Schraube, die mit einem Exzenter verbunden ist, ein Exzenter zwischen dem zu verstellenden Teil und einer fixen Basis rotiert und somit kann eine Abstandsverstellung bewirkt werden.

Man kann auch mit Hilfe einer Schraube direkt den Abstand zwischen dem zu verstellenden Teil und einer fixen Basis verstellen. Es sind federnde Druckstücke mit Option für Schraubverstellung kommerziell erhältlich. Das Druckstück hat beispielsweise am Mantel eine Außengewinde und einen Schlitz (für einen Schraubenzieher) auf der Basis.

Bei einer Keil- oder Exzenterverstellung kann das dazugehörige Verstellmittel aus einer Richtung senkrecht zur Verstellrichtung, d.h., parallel zu einer Trennfläche des ersten Körpers zu dem Gegenstück, bedient werden, dagegen bei einer Schraubenverstellung muss die Schraube in der Regel entlang der Verstellungslinie und senkrecht zur besagten Trennfläche bedient werden.

Der Vorteil der Keil- bzw. Exzenterverstellung ist, dass selbst bei einem im Fahrradrahmen eingebauten Stabilisator, das Verstellmittel immer noch mühelos erreichbar und bedienbar sein kann.

Wenn der Stabilisator als ein Einschlagstopper benutzt wird, kann die Vertiefung im ersten Körper kombiniert mit dem Gegenstück (z.B. mit dem federnden Druckstück des zweiten Körpers) mittels des Verstellmittels der Keilverstellung bzw. Exzenterverstellung mit einer maximalen Vorspannkraft arretiert werden.

Das Verstellmittel der Keilverstellung und der Exzenterverstellung können für eine Abstell- bzw. Stop- oder Fahrt-Position einrastend und sichernd bedient werden.

Solange der Stabilisator leicht zugänglich ist, kann jede Art von Abstandsverstellung für die Einstellung der Vorspannkraft im Stabilisator benutzt werden.

Der Stabilisator kann auch im Steuersatz eines Fahrradlenkers direkt integriert werden. D.h., die Lagerschale ist der erste Körper mit einer auf der dem Konus gewandten Basisfläche, die Vertiefung aufweist. Der Konus ist der zweite Körper und enthält ein Gegenstück (z.B. ein eingebautes federndes Druckstück), dessen Wälzkörper auf die Basisfläche des ersten Körpers (der Lagerschale) druckt.

Die Abstandseinstellung zwischen den Körpern für die Verstellung der Vorspannkraft soll am Gegenstück des zweiten Körpers im fixierten Konus des Steuersatzes stattfinden. Im Fahrradrahmen muss dann eine Öffnung für den Zugang zu dem Verstellmittel für die Keil- oder Exzenterverstellung im Konus geschaffen werden, die mit einem Stopfen gegen Verschmutzung verschließbar ist.

Wie schon oben beschrieben ist ein federndes Druckstück ein Maschinenbauteil, das aus einer Gewindehülse mit innenliegender Feder, die auf eine Kugel druckt, besteht.

Die Gewindehülse kann direkt mit Hilfe eines Einsteckschraubschlüssels oder eines Schraubenziehers innerhalb einer Gewindebohrung der Lagerschale voreingestellt werden. Eine seitliche Einstellung der Vorspannkraft mit einer Keil- oder Exzenterverstellung ist möglich, wozu innerhalb der Hülse des federnden Druckstücks zwischen der Feder und dem Hülsenboden ein Keil oder ein Exzenter angeordnet ist. Auch wenn die Konstruktion für die Keil- bzw. Exzenterverstellung aufwendiger ist als bei einem einfachen, federnden Druckstück, liegt der Vorteil der Keil- bzw. Exzenterverstellung auf der Hand, weil die Einstellung der Vorspannkraft des Stabilisators innerhalb eines Fahrradsteuersatzes auch nachträglich direkt am Fahrrad vorgenommen werden kann.

Bei allen Ausführungsformen des Stabilisators ist zu beachten, dass durch die Kombination des ersten Körpers mit dem Gegenstück, eine maximale Lenkung des Fahrradlenkers durch den Stabilisator nicht gehemmt wird.

### Kurzbeschreibung der Abbildungen

Ausführungsbeispiele des Stabilisators für eine Fahrradlenkung werden anhand der folgenden Zeichnungen beschrieben. Es zeigt:
Fig. 1 eine schematische Seitenansicht eines Stabilisators mit Vertiefung aufweisendem ersten Körper und einem Gegenstück mit konvexer Erhebung auf einem zweiten Körper,
Fig. 2 eine schematische Seitenansicht eines Stabilisators aufweisend ein Gegenstück mit einem federnden Vorspannmittel (Bolzen) auf dem zweiten Körper,
Fig. 3 eine schematische Seitenansicht eines Stabilisators aufweisend ein Gegenstück mit einem federnden Vorspannmittel (Wälzkörper) auf dem zweiten Körper,
Fig. 4 eine schematische Seitenansicht eines Stabilisators mit dem ersten Körper und dem zweiten Körper jeweils als elastische Plattenstreife ausgebildet,
Fig. 5 eine schematische Seitenansicht eines Stabilisators mit Vertiefung aufweisendem ersten Körper und einem Gegenstück mit konvexer Erhebung auf einem zweiten Körper integriert in einem Steuersatz,
Fig. 6 eine schematische Seitenansicht eines Stabilisators aufweisend ein Gegenstück mit einem federnden Vorspannmittel (Wälzkörper) auf dem zweiten Körper integriert in einem Steuersatz,
Fig. 7 eine schematische Seitenansicht eines Stabilisators mit Rille aufweisenden ersten Körper und einem Gegenstück mit einem federnden Vorspannmittel (Wälzkörper) auf dem zweiten Körper zum Integrieren in einem Steuersatz,
Fig. 7a eine Detaildarstellung der Seitenansicht eines federnden Vorspannmittels (Wälzkörper) aus dem Fig. 7,
Fig. 7b eine Detaildarstellung der Seitenansicht eines federnden Vorspannmittels (Bolzen) aus dem Fig. 2 und Fig. 7,
Fig. 8 eine schematische Seitenansicht eines Stabilisators mit Rille aufweisenden ersten Körper und einem Gegenstück mit einem federnden Vorspannmittel (Kontaktkörper, Wälzkörper) auf dem zweiten Körper integriert in einem Steuersatz,
Fig. 9 eine schematische Seitenansicht eines Stabilisators wie im Fig. 8 jedoch der Kontaktkörper ist nicht mehr mit der Vertiefung in Kontakt.
Fig. 10 eine schematische Draufsicht des Stabilisators wie in Fig. 8 und 9,
Fig. 11 eine schematische Seitenansicht eines Stabilisators mit Rille aufweisenden ersten zylindrischen Körper und einem Gegenstück mit einem federnden Vorspannmittel (Wälzkörper) auf dem zweiten Körper zum Integrieren in einem Steuersatz,
Fig. 12 eine schematische Seitenansicht eines Stabilisators mit Rille aufweisenden ersten zylindrischen Körper und einem Gegenstück mit einem federnden Vorspannmittel (Wälzkörper) auf dem zweiten Körper integriert in einem Steuersatz,
Fig. 13 eine schematische Darstellung eines Fahrradsteuersatzes gemäß dem Stand der Technik,
Fig. 14k eine schematische Darstellung einer Keilverstellung gemäß dem Stand der Technik,

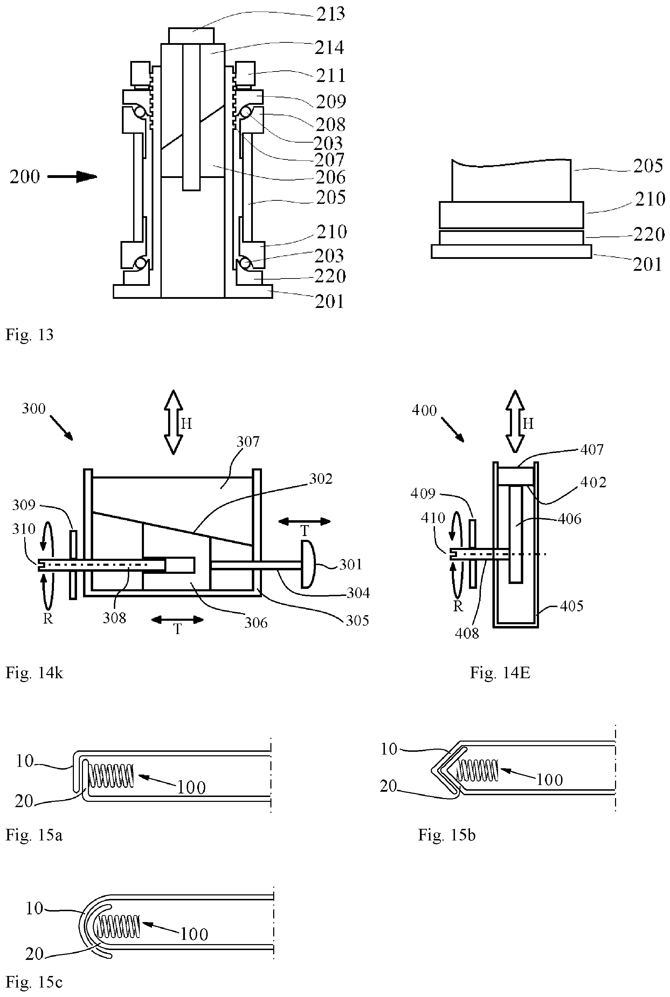

Fig. 14E eine schematische Darstellung einer Exzenterverstellung gemäß dem Stand der Technik,
Fig. 115a eine schematische Seitenansicht eines Stabilisators mit einem zylindrischen ersten Körper und mit einem zylindrischen zweiten Körper und mit einem Vorspannmittel (ohne Darstellung der Vertiefung und des Gegenstückes),
Fig. 115b eine schematische Seitenansicht eines Stabilisators wie in Fig. 15a jedoch die Mäntel der Körper sind geknickt,
Fig. 115c eine schematische Seitenansicht eines Stabilisators wie in Fig. 15a jedoch die Mäntel der Körper sind bauchig (kurvig).

### Detaillierte Beschreibung der Ausführungsformen

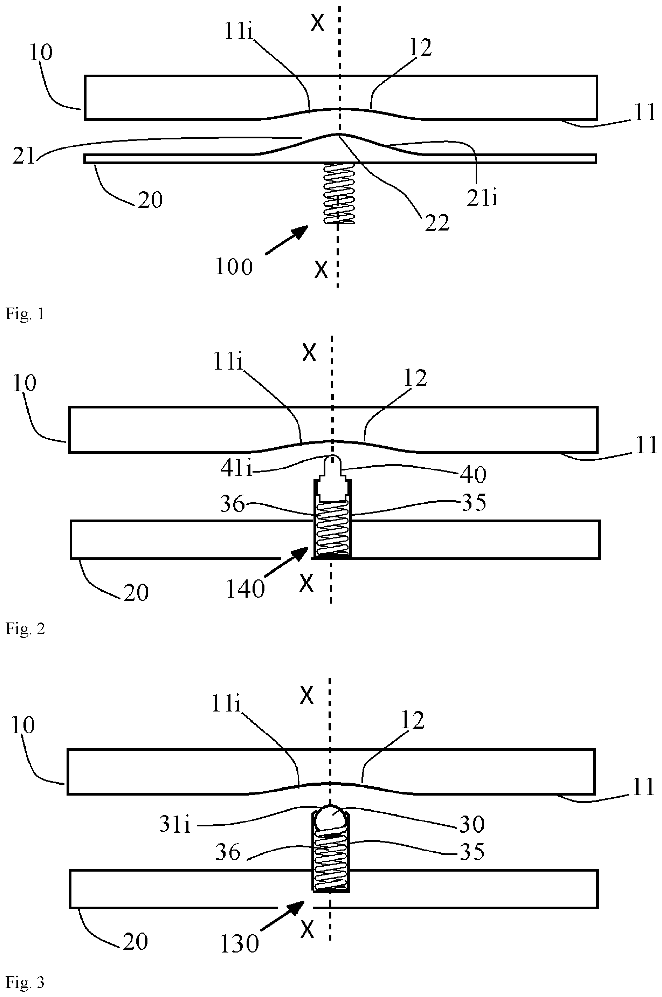

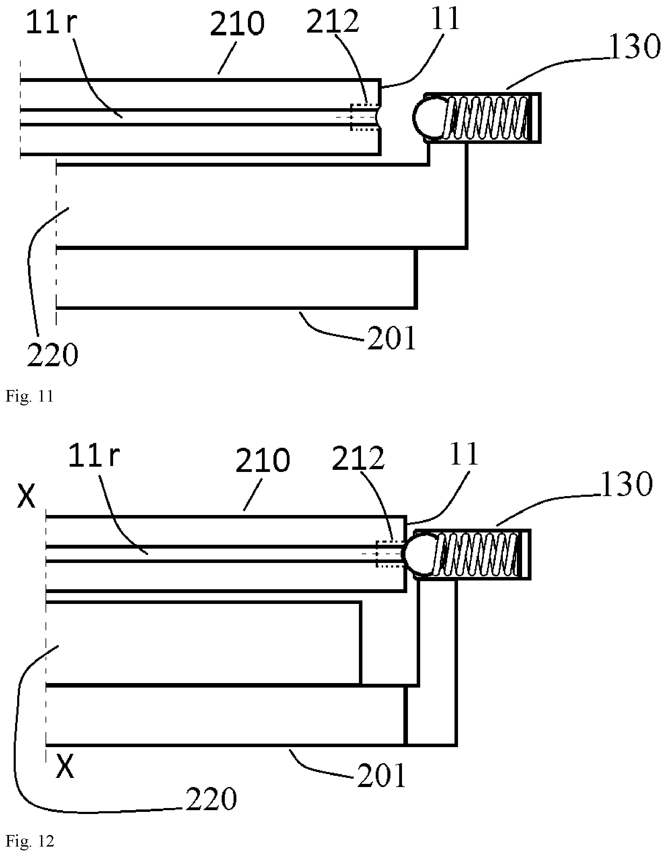

Der erfindungsgemäße Stabilisator 1 für eine Fahrradlenkung (Fig. 1-3, 7-12), umfasst einen ersten Körper 10, 210 mit einer Basisfläche 11, die eine Vertiefung 12, 212 mit einer Kontaktfläche 11i aufweist, und einen zweiten Körper 20, 220 mit einem Gegenstück 22, 130, 140, das ein Vorspannmittel aufweist.

Das Gegenstück 22, 130, 140 hat einen Kontaktkörper 21, 30, 40 mit einer Reibfläche 21i, 31i, 41i, die der Kontaktfläche 11i des ersten Körpers 10, 210 zugewandt ist.

Die Kontaktfläche 11i des ersten Körpers 10, 210 und die Reibfläche 21i, 31i, 41i des Gegenstückes 22, 130, 140 sind unter einer vorbestimmten Vorspannung mindestens teilweise miteinander in Kontakt.

Der erste Körper 10, 210 und der zweite Körper 20, 220 sind zueinander um einer Achse XX koaxial und drehbar gelagert.

Wenn der Stabilisator 1 als ein Aufsatzteil verwendet wird, ist der erste Körper 10, 210 an dem Lenker oder an der Gabel des Fahrrades und der zweite Körper 20, 220 am Rahmen des Fahrrades befestigt (Fig. 1-3).

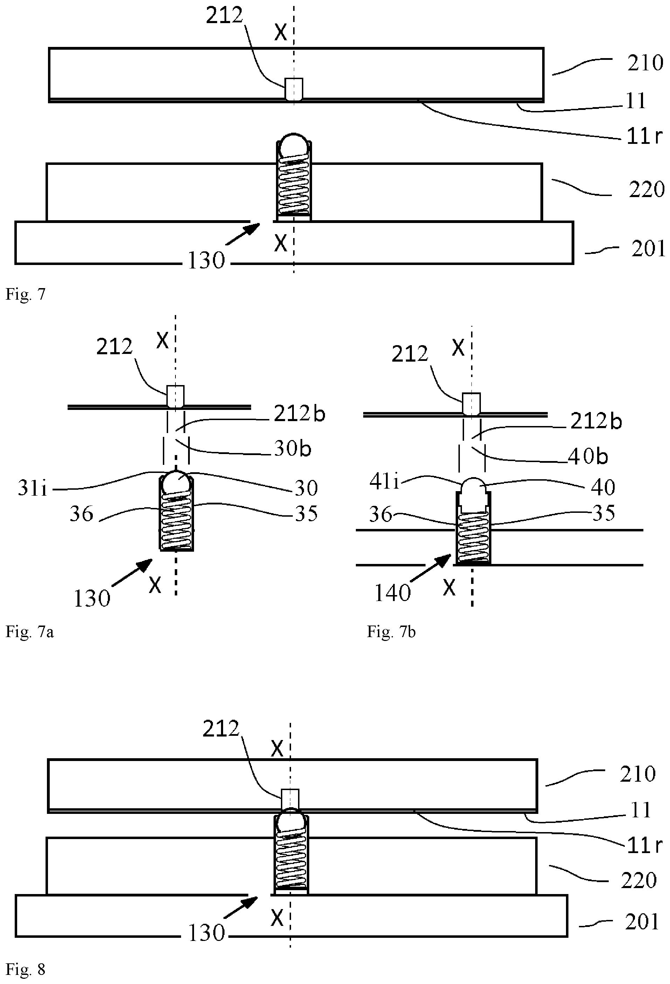

Wenn der Stabilisator 1 als ein Einbauteil für einen Steuersatz 200 verwendet wird, ist der erste Körper 10, 210 als eine Lagerschale 208, 210 des Steuersatzes 200 und der zweite Körper 20, 220 als ein Konus 209, 220 des Steuersatzes 200 ausgebildet (Fig. 7-13).

In einer besonderen Ausführungsform der Erfindung kann der Kontaktkörper 30, 40 des Gegenstückes 130, 140 mit der Vertiefung 212 so abgestimmt werden, dass der Kontaktkörper 30, 40 nur teilweise in die Vertiefung 212 eindringen kann. D.h., der Kontaktkörper 30, 40 wird am Rande der Vertiefung 212 gestoppt und kann nicht tiefer hinein dringen (Fig. 8).

Dies wird erzielt dadurch, dass eine Breite der Projektion 30b, 40b des Kontaktkörpers 30, 40 des Gegenstückes 130, 140 größer ist als eine Breite der Vertiefung 212b, so dass der Kontaktkörper 30, 40 nur teilweise in die Vertiefung 212 eindringen kann (Fig. 7a, 7b).

Dies hat den Vorteil, dass keine formschlüssige Verbindung zwischen dem Kontaktkörper 30, 40 des Gegenstückes 130, 140 und der Vertiefung 212 gibt, so dass der Fahrradlenker nur gegen eine geringe stabilisierende Federkraft umgelenkt werden kann.

Die Funktion des Gegenstückes 22, 130, 140 ist, mit einer vorbestimmten Vorspannung Kraft auf die Basisfläche 11 auszuüben, die den Kontaktkörper 21, 30, 40 zwingt in die Vertiefung 12, 212 einzudringen bzw. einzuschnappen, wenn die Lenkung sich in der Position der Geradeausfahrt befindet. Die Vorspannkraft wird mittels eines Vorspannmittels des Gegenstückes 22, 130, 140 (Fig. 1-3, 8) oder mittels einer inhärenten Elastizität des ersten

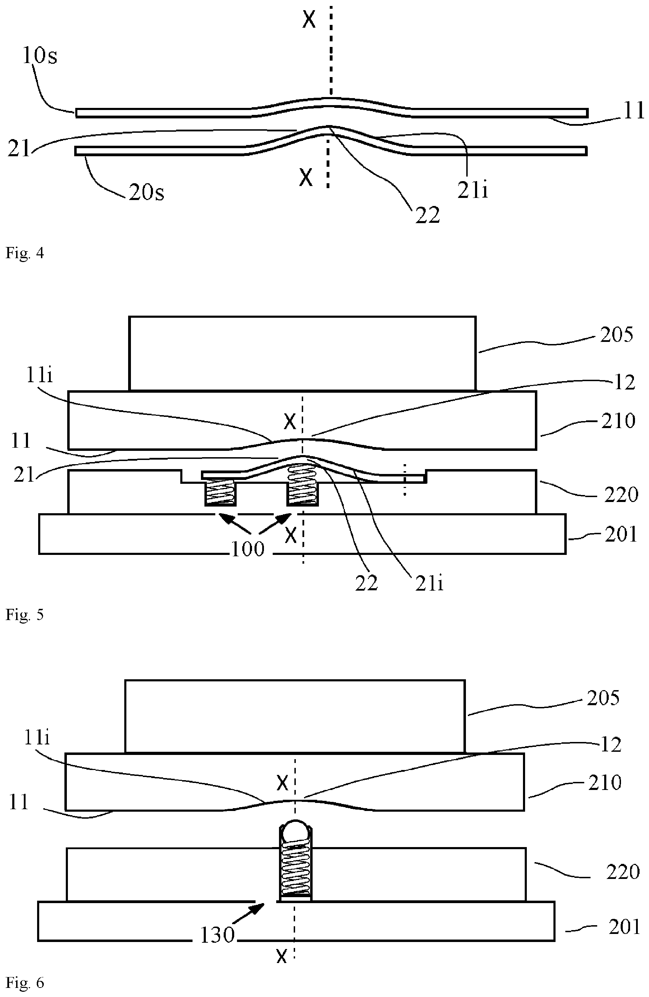

Körpers 10s oder / und des zweiten Körpers 20s (Fig. 4) erzeugt. Beispielsweise ist der erste Körper 10s oder der zweite Körpers 20s jeweils als eine elastische Plattenstreife ausgebildet. Eine sinnvolle Kombination der erwähnten Elastizitäten ist möglich. Z.B. kann der elastische zweite Körpers 20s zusammen mit einem Vorspannmittel 100, das eine Feder sein kann, noch mehr Möglichkeiten für die Bereitstellung einer Vorspannkraft erzielen.

Die Kontaktkörper 21, 30, 40 der Gegenstücke 22, 130, 140 sind unterschiedlich ausgebildet. Der Kontaktkörper 21 des Gegenstücks 22 ist eine konvexe Erhebung mit einer Reibfläche 21i (Fig. 1). Der Vorteil der konvexen Erhebung ist, dass sie individuell je nach Bedarf an die Vertiefung 12 angepasst werden kann.

Der Kontaktkörper 40 des Gegenstücks 140 ist ein Bolzen mit einer Reibfläche 41i (Fig. 2). Der Vorteil des Kontaktkörpers 40, der als ein Bolzen ausgebildet ist, ist dass das Gegenstück als ein kommerziell erhältliches federndes Druckstück günstig beschaffen werden kann.

Der Kontaktkörper 30 des Gegenstücks 130 ist ein Wälzkörper mit einer Reibfläche 31i (Fig. 3). Auch der Vorteil des Kontaktkörpers 30, der als ein Wälzkörper ausgebildet ist, ist dass das Gegenstück als ein kommerziell erhältliches federndes Druckstück günstig beschaffen werden kann. Weiter der Wälzkörper hat einen geringeren Reibungswert als eine konvexe Erhebung oder ein Bolzen.

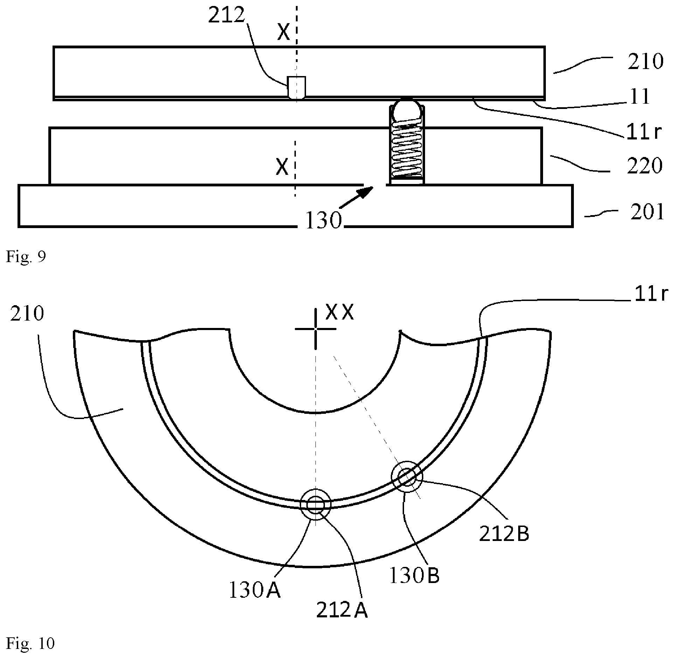

Die Körper sind sinnvollerweise ringförmig oder als ein Ringsegment ausgebildet und zueinander koaxial und drehbar angeordnet (Fig. 10). Die Körper können senkrecht zu der Drehachse angeordnet sein. Das ist der Fall, wenn zwei scheibenförmige Körper drehbar aufeinander liegen (Fig. 1-3). Die Körper können auch ineinander liegende Rotationsflächen haben (Fig. 15a-15c). Formen wie Zylinder mit jeweils im Wesentlichen geraden, geknickten oder bauchigen (kurvigen) Mänteln und genau so konische Mäntel sind möglich.

Bei einem scheibenförmigen ersten Körper 10 ist es sinnvoll eine Kugel oder einen Kegel als Kontaktkörper 30 zu verwenden.

Bei einem konischen ersten Körper ist es sinnvoll eine Kugel oder einen Kegel als Kontaktkörper zu verwenden. Eine Kugel kann immer als Kontaktkörper verwendet werden.

Für eine bessere Führung des Kontaktkörpers und ins Besondere des Wälzkörpers 30 kann eine Rille 11r auf der Basisfläche 11 des ersten Körpers 210 angebracht werden. Die Rille 11r liegt auf der Basisfläche 11, auf einer kreisförmigen Bahn und überschneidet die Vertiefung 212, so dass bei einer Umlenkung des Fahrradlenkers aus der Position der Geradeausfahrt, der Kontaktkörper aus der Vertiefung 212 heraus geführt wird und bei einer Umlenkung des Fahrradlenkers in die Position der Geradeausfahrt der Kontaktkörper in die Vertiefung 212 hineingeführt wird und der Kontaktkörper in die Vertiefung 212 unter der Federkraft der Feder 36 einschnappt (Fig. 7-12).

Die Bestandteile des Stabilisator 1 könne aus beliebigem Material beschaffen sein. Bei der Auswahl und Übereinstimmung des Materials soll auf die Verschleißfestigkeit und des geringen Reibungsbeiwerts der miteinander in Kontakt stehenden Teile geachtet werden. Eine leichte Fixierung des Fahrradlenkers in der Position der Geradeausfahrt ist die Lösung der vorliegenden Erfindung für die Aufgabe der Rotationsdämpfung des Fahrradlenkers. Diese Fixierung wird mit der Vorspannung des Kontaktkörpers des Gegenstückes gegen den ersten Körper mittels eines Vorspannmittels bewerkstelligt. Sobald jedoch der Kontaktkörper bei einer Umlenkung des Fahrradlenkers aus der Fixierungsposition heraus geführt wird, muss die Reibung zwischen dem Kontaktkörper und der Basisfläche des ersten Körpers geringgehalten werden. Deswegen müssen hier die Materiale für den Kontaktkörper und der Basisfläche für eine geringe Reibung ausgewählt werden.

Hierzu sind Beispiele in der Tabelle 1 erwähnt.

Das Material für den ersten Körper 10, 210, den zweiten Körper 20, 220 oder den Kontaktkörper 21, 30, 40 des Gegenstückes 22, 130, 140 kann aus Kunststoff, Keramik, Metall oder Metalllegierung beschaffen sein. Das Metall kann Stahl und die Metalllegierung eine Stahllegierung sein.

Die Einstellung der Vorspannung des Gegenstückes (22, 130, 140) gegen den ersten Körper (10, 210) kann durch eine aus dem Stand der Technik bekannte Keilverstellung 300, eine Exzenterverstellung 400 oder eine Schraubenverstellung ausgeführt werden.

Beispielsweise wird die Keilverstellung 300 und Exzenterverstellung 400 jeweils mittels eines Verstellmittels 304, 308, 408, das parallel zu einer Kontaktebene zwischen dem Gegenstückes 22, 130, 140 und dem ersten Körper 10, 210 angeordnet ist, ausgeführt.

Mit dem Verstellmittel 304, 308, 408 kann beispielsweise zwei Positionen nämlich eine Dämpfungsstellung und eine Klemmstellung mittels der Keilverstellung 300, der Exzenterverstellung 400 oder Schraubverstellung ausgewählt werden, wobei für die Dämpfungsstellung das Vorspannmittel 100, 130, 140 auf einer vorbestimmen Vorspannung eingestellt wird (Fig. 14k, 14E).

Auch ein Ringexzenter (nicht gezeigt) kann das Vorspannmittel 130 gegen den ersten Körper 210 erzwingen.

Für die Klemmstellung wird das Vorspannmittel 100, 130, 140 auf einer höheren Vorspannung als bei der Dämpfungsstellung oder auf der maximalen Vorspannung eingestellt. Damit wird Stabilisator 1 ein Einschlagstopper für den Fahrradlenker.

Der hier beschriebe Stabilisator 1 kann auch für einen Fahrradsteuersatz 200 implementiert werden (Fig. 5-13).

In Fig. 14K ist eine schematische Darstellung einer Keilverstellung 300 gemäß dem Stand der Technik gezeigt.

Die Keilverstellung 300 umfasst ein Gehäuse 305 zur Aufnahme von dem angetriebenen Keil 306 und dem Hubkeil 307, die auf einer geneigte Ebene 302 miteinander verschiebbar im Kontakt sind. Der Keil 306 kann entlang des Gehäusebodens in der Bewegungsrichtung T angetrieben und verschoben werden. Der Antrieb kann mittels eines Schaubverstellmittels 308 stattfinden, das mit dem Keil 306 gelenkig verbunden ist. Das Schaubverstellmittel 308 kann in einem Gewinde im Gehäuse 305 mittels eines Drehknopfes 309 oder eines Schraubenziehers im Zusammenhang mit einem Schraubenschlitz 310 in Richtung R gedreht werden um somit eine translatorische Bewegung des Keiles 306 in Richtung T zu bewirken. Hierdurch können die Keile 306 und 307 entlang der geneigten Ebene 302 bewegen, so dass ein Hub des Keiles 307 in Richtung H bewirkt wird.

So wie zuvor für die Schaubverstellung beschrieben kann nun der Keil 307 die Vorspannung zwischen dem erfindungsgemäßen ersten Körper 10, 210 und dem Gegenstück 22, 130, 140 bewirken.

Die translatorische Bewegung des Keiles 306 in der Richtung T kann auch alternativ durch einen Druck- Zugknopf 301 und ein mit dem Druck- Zugknopf 301 und dem Keile 306 verbundenes Schieberverstellmittel 304 bewirkt werden, das im Gehäuse 305 verschiebbar gelagert ist.

Sinnvollerweise kann nach einer ersten Einstellung der gewünschten Vorspannung bzw. Dämpfung die eingestellte Position auf dem Verstellmittel 304 oder 308 als ''Fahrt" festgehalten werden. Das Fahrrad kann mit dem Anzeiger auf ''Fahrt" mit einem stabilen Lenker gefahren werden. Der Stabilisator 1 fungiert in diesem Fall als ein Dämpfer.

Eine zweite Position kann auf dem Verstellmittel 304 oder 308 als ''Stop" festgehalten werden, bei der die Vorspannung erhöht oder gar zu einem Maximalwert erhöht wird.

Das Fahrrad kann mit dem Anzeiger auf ''Stop" in einer Geradeausstellung des Lenkers abgestellt werden. Der Stabilisator 1 fungiert in diesem Fall als ein Einschlagstopper.

In Fig. 14E ist eine schematische Darstellung einer Exzenterverstellung 400 gemäß dem Stand der Technik gezeigt.

Die Exzenterverstellung 400 umfasst ein Gehäuse 405 zur Aufnahme eines Verstellmittels 408, das als eine Drehwelle im Gehäuse 405 drehbar gelagert ist. Ein Exzenter 406 ist mit dem Verstellmittel 408 verbunden. Ein Hubteil 407 ist im Gehäuse 405 verschiebbar gehalten. Eine translatorische Bewegung des Hubteils 407 in der Richtung H kann durch einen mit dem Verstellmittel 408 verbundenen Exzenter 406 bewirkt werden.

Das Verstellmittel 408 kann mittels eines Drehknopfes 409 oder eines Schraubenziehers im Zusammenhang mit einem Schraubenschlitz 410 in Richtung R gedreht werden um somit eine Hubbewegung des Hubteils 407 in Richtung H zu bewirken. Dabei steht der Exzenter 406 mit dem Hubteil 407 auf der Kontaktfläche 402 des Hubteils 407 in Berührung.

Sinnvollerweise kann nach einer ersten Einstellung der gewünschten Vorspannung bzw. Dämpfung die eingestellte Position auf dem Verstellmittel 408 als ''Fahrt" festgehalten werden. Das Fahrrad kann mit dem Anzeiger auf ''Fahrt" mit einem stabilen Lenker gefahren werden. Der Stabilisator 1 fungiert in diesem Fall als ein Dämpfer.

Eine zweite Position kann auf dem Verstellmittel 408 als ''Stop" festgehalten werden, bei der die Vorspannung erhöht oder gar zu einem Maximalwert erhöht wird.

Das Fahrrad kann mit dem Anzeiger auf ''Stop" in einer Geradeausstellung des Lenkers abgestellt werden. Der Stabilisator 1 fungiert in diesem Fall als ein Einschlagstopper.

In Fig. 13 ist eine schematische Darstellung eines Steuersatzes 200 für ein Fahrrad gemäß dem Stand der Technik gezeigt. Der Steuersatz umfasst eine Gewindegabelschaft 201 mit einem Gewinde 207, eine Vielzahl von Lagerkugeln 203, ein Steuerrohr 205, ein Klemmkeil 206, eine obere Lagerschale 208, einen Konus 209 (Konusmutter), eine untere Lagerschale 210, eine Kontermutter 211, einen Schaftvorbau 212, eine Spannschraube 213 und einen Konus 220 (Gabelkonus). Die Lagerschalen 210 und 208 werden mittels einer Vielzahl von Lagerkugeln 203 und dem Gabelkonus 220 und der Konusmutter 209 gegen das Steuerrohr 205 verspannt.

Hierzu wird die Konusmutter 209 im Zusammenhang mit dem Gewinde 207 gegen die Gewindegabelschaft 201 angezogen.

Für die erfindungsgemäße Lösung der Dämpfung sind vor allem folgende Teile eines Steuersatzes 200 für ein Fahrrad relevant: der Gabelkonus 220 und die untere Lagerschale 210 oder alternativ die Konusmutter 209 und die obere Lagerschale 208. In den nächsten Ausführungsformen werden vereinfachend und stellvertretend nur der Gabelkonus 220 und die untere Lagerschale 210 erwähnt.

Nach einer besonderen Ausführungsform der Erfindung wird der oben beschriebene Stabilisator 1 in einen kommerziell erhältlichen Steuersatz 200 eingebaut (Fig. 5-13).

Nach einer weiteren Ausführungsform der Erfindung wird der erste Körper des Stabilisators 1 als eine Lagerschale 210 des Steuersatzes 200 ausgebildet und das Gegenstück 130, 140 des Stabilisators 1 in einem Gabelkonus 220 des Steuersatzes 200 integriert (Fig. 7-8).

Nach einer besonderen Ausführungsform der Erfindung weist der im Steuersatz 200 integrierte Stabilisator 1 für die Einstellung der vorbestimmten Vorspannung ein Verstellmittel 304, 308 oder 408 auf, bei dem zwischen zwei Positionen nämlich ''Fahrt" und ''Stop" der Keilverstellung 300 oder Exzenterverstellung 400 gewählt werden kann.

Bei der Position ''Fahrt" wird eine erste Einstellung der gewünschten Vorspannung für die Dämpfung eingestellt. Das Fahrrad kann mit dem Anzeiger auf ''Fahrt" mit einem stabilen Lenker gefahren werden. Bei der Position ''Stop" wird eine zweite Einstellung der gewünschten Vorspannung für die Parkposition eingestellt. Die Vorspannung kann für ''Stop" erhöht oder gar zu einem Maximalwert erhöht werden. In diesem Fall druckt der Hubkeil 307 oder Hubteil 407 auf das Gegenstück 22, 130, 140 (Fig. 1-3) oder auf das Vorspannmittel 100 (Fig. 5).

### Bezugszeichenliste

- 1: Stabilisator
- 10: erster Körper
- 10s: erster Körper als elastische Plattenstreife
- 11i: Kontaktfläche auf Vertiefung des ersten Körpers
- 11: Basisfläche des ersten Körpers
- 11r: Rille auf dem ersten Körper
- 12: Vertiefung
- 20: zweiter Körper
- 20s: zweiter Körper als elastische Plattenstreife
- 21i: Reibfläche des Kontaktkörpers
- 21: Kontaktkörper
- 22: Gegenstück
- 30: Wälzkörper
- 30b: Breite der Projektion des Wälzkörpers
- 31i: Reibfläche des Wälzkörpers
- 35: Gehäuse eines federnden Vorspannmittels
- 36: Feder des Vorspannmittels
- 40: Bolzen
- 40b: Breite der Projektion des Bolzens
- 41i: Reibfläche des Bolzen
- 100: Vorspannmittel
- 130: Gegenstück, federndes Vorspannmittel mit Wälzkörper
- 140: Gegenstück, federndes Vorspannmittel mit Bolzen
- 200: Steuersatz
- 201: Gewindegabelschaft
- 203: Lagerkugel
- 205: Steuerrohr
- 206: Klemmkeil
- 207: Gewinde am Gabelschaft
- 208: Lagerschale Obere
- 209: Konus Konusmutter
- 210: Lagerschale Untere
- 211: Kontermutter
- 212: Vertiefung zylindrische
- 212b: Breite der Vertiefung
- 213: Spannschraube
- 214: Schaftvorbau
- 220: Konus Gabelkonus
- 300: Keilverstellung
- 301: Druck- Zugknopf
- 302: geneigte Ebene
- 304: Verstellmittel Schieber
- 305: Gehäuse
- 306: Keil angetrieben
- 307: Keil Hub
- 308: Verstellmittel Schraube
- 309: Drehknopf für Verstellmittel Schraube
- 310: Schlitz
- 400: Exzenterverstellung
- 402: Kontaktfläche
- 405: Gehäuse
- 406: Exzenter
- 407: Hubteil
- 408: Verstellmittel Drehwelle
- 409: Drehknopf für Verstellmittel Drehwelle
- 410: Schlitz
- H: Hubbewegungsrichtung
- R: Drehbewegungsrichtung
- T: Bewegungsrichtung translatorisch
- XX: gemeinsame Achse

## Patentansprüche

1. Stabilisator (1) für eine Fahrradlenkung für einen vorbestimmten Lenkwinkelbereich, aufweisend:
einen ersten Körper (10, 210) mit einer Basisfläche (11);
einen zweiten Körper (20, 220) mit einem Gegenstück (22, 130, 140), das ein Vorspannmittel aufweist;
wobei das Gegenstück (22, 130, 140) einen Kontaktkörper (21, 30, 40) mit einer Reibfläche (21i, 31i, 41i) umfasst,
wobei die Reibfläche (21i, 31i, 41i) des Gegenstückes (22, 130, 140) dem ersten Körper (10, 210) zugewandt ist,
wobei der erste Körper (10, 210) und der zweite Körper (20, 220) zueinander um eine Achse (XX) koaxial und drehbar gelagert sind,
**dadurch gekennzeichnet, dass**
die Basisfläche (11) eine Vertiefung (12, 212) mit einer Kontaktfläche (11i) aufweist,
wobei die Kontaktfläche (11i) ausgebildet ist, um mit der Reibfläche (21i, 31i, 41i) unter einer vorbestimmten Vorspannung mindestens teilweise in Kontakt zu sein,
und wobei der erste Körper (10, 210) an einem Lenker oder an einer Gabel eines Fahrrades befestigbar ist und der zweite Körper (20, 220) am Rahmen des Fahrrades befestigbar ist,
oder
wobei der erste Körper (10, 210) als eine Lagerschale (208, 210) eines Steuersatzes (200) und der zweite Körper (20, 220) als ein Konus (209, 220) des Steuersatzes (200) ausgebildet sind.

2. Stabilisator (1) nach Anspruch 1, wobei eine Breite (30b, 40b) des Kontaktkörpers (30, 40) des Gegenstückes (130, 140) größer ist als die Breite der Vertiefung (212b) und wobei der Kontaktkörper (30, 40) nur teilweise in die Vertiefung (212) eindringbar ist.

3. Stabilisator (1) nach Anspruch 1, wobei die Richtung einer auf das Gegenstück (22, 130, 140) ausgeübten Kraft zur Erzeugung der vorbestimmten Vorspannung im Wesentlichen senkrecht zur Basisfläche (11) ist,
und wobei die Vorspannkraft mittels eines Vorspannmittels oder / und mittels einer inhärenten Elastizität des ersten Körpers (10s) oder / und des zweiten Körpers (20s) erzeugbar ist, wobei der erste Körper (10s) oder / und der zweite Körpers (20s) jeweils als eine elastische Plattenstreife ausgebildet ist.

4. Stabilisator (1) nach einem der vorangehenden Ansprüche, wobei der Kontaktkörper (21) des Gegenstücks (22) eine konvexe Erhebung (21) mit einer Reibfläche (21i) ist oder der Kontaktkörper (30) des Gegenstücks (130) ein Wälzkörper mit einer Reibfläche (31i) ist oder der Kontaktkörper (40) des Gegenstücks (140) ein Bolzen mit einer Reibfläche (41i) ist.

5. Stabilisator (1) nach Anspruch 4, wobei der erste Körper (210) auf seiner dem Gegenstück (130) zugewandten Basisfläche (11) eine Rille (11r) zum Führen des Wälzkörpers (30) des Gegenstückes (130) aufweist,
wobei die Rille (11r) auf einer kreisförmigen Bahn liegt, und wobei die Rille (11r) und die Vertiefung (212) sich überschneiden.

6. Stabilisator (1) nach einem der vorangehenden Ansprüche, wobei mindestens der erste Körper (10, 210), der zweite Körper (20, 220) oder der Kontaktkörper (21, 30, 40) des Gegenstückes (22, 130, 140) aus Kunststoff, Keramik, Metall oder Metalllegierung beschaffen ist.

7. Stabilisator (1) nach Anspruch 6, wobei mindestens der erste Körper (10, 210), der zweite Körper (20, 220) oder der Kontaktkörper (21, 30, 40) aus Stahl beschaffen ist.

8. Stabilisator (1) nach einem der vorangehenden Ansprüche, wobei der erste Körper (10, 210) als eine ebene Scheibe, ein zylindrischer Mantel oder ein konischer Mantel ausgebildet ist.

9. Stabilisator (1) nach einem der vorangehenden Ansprüche, wobei die Vorspannung des Gegenstückes (22, 130, 140) gegen den ersten Körper (10, 210) durch mindestens eine Keilverstellung (300) und / oder Exzenterverstellung (400) und / oder eine Schraubenverstellung ausführbar ist, wobei
die Keilverstellung (300) und Exzenterverstellung (400) jeweils mittels eines Verstellmittels (304, 308, 408), das parallel zu einer Kontaktebene zwischen dem Gegenstück (22, 130, 140) und dem ersten Körper (10, 210) angeordnet ist, ausführbar ist.

10. Steuersatz (200) mit eingebautem Stabilisator (1) für ein Fahrrad mit einer Fahrradlenkung nach einem der Ansprüche 1 bis 9.

11. Steuersatz (200) mit eingebautem Stabilisator (1) für ein Fahrrad mit einer Fahrradlenkung nach Anspruch 9, wobei für das Verstellmittel (304, 308, 408) zwei Positionen nämlich Dämpfungsstellung und Klemmstellung mittels der Keilverstellung (300) oder der Exzenterverstellung (400) auswählbar ist, wobei für die Dämpfungsstellung das Vorspannmittel (100, 130, 140) auf einer vorbestimmen Vorspannung eingestellt ist, und wobei für die Klemmstellung das Vorspannmittel (100, 130, 140) auf einer höheren Vorspannung als bei der Dämpfungsstellung oder auf der maximalen Vorspannung eingestellt ist.

## Claims

1. Stabilizer (1) for a bicycle steering for a predetermined steering angle range, comprising:
a first body (10, 210) with a base surface (11);
a second body (20, 220) with a counterpart (22, 130, 140) having a prestressing (preloading) means;
wherein the counterpart (22, 130, 140) comprises a contact body (21, 30, 40) with a friction surface (21i, 31i, 41i),
wherein the friction surface (21i, 31i, 41i) of the counterpart (22, 130, 140) faces the first body (10, 210),
wherein the first body (10, 210) and the second body (20, 220) are mounted coaxially and rotatably about an axis (XX),
**characterized in that,**
the base surface (11) having a depression (12, 212) with a contact surface (11i),
wherein the contact surface (11i) is designed to be at least partially in contact with the friction surface (21i, 31i, 41i) under a predetermined prestress,
wherein the first body (10, 210) is attached to a handlebar or a fork of a bicycle and the second body (20, 220) is attached to the frame of the bicycle,
or
wherein the first body (10, 210) is designed as a bearing shell (208, 210) of a headset (200) and the second body (20, 220) is designed as a cone (209, 220) of the headset (200).

2. Stabilizer (1) according to claim 1, wherein a width (30b, 40b) of the contact body (30, 40) of the counterpart (130, 140) is greater than the width of the depression (212b) and wherein the contact body (30, 40) can only partially penetrate into the depression (212).

3. Stabilizer (1) according to claim 1, wherein the direction of a force exerted on the counterpart (22, 130, 140) for generating the predetermined prestress is substantially perpendicular to the base surface (11),
and wherein the prestressing force being producible by means of a prestressing means and/or by means of an inherent elasticity of the first body (10s) and/or the second body (20s), wherein the first body (10s) and/or the second body (20s) is each designed as an elastic plate strip.

4. Stabilizer (1) according to one of the preceding claims, wherein the contact body (21) of the counterpart (22) is a convex elevation (21) with a friction surface (21i) or the contact body (30) of the counterpart (130) is a rolling element with a friction surface (31i) or the contact body (40) of the counterpart (140) is a bolt with a friction surface (41i).

5. Stabilizer (1) according to claim 4, wherein the first body (210) has a groove (11r) on its base surface (11) facing the counterpart (130) for guiding the rolling element (30) of the counterpart (130),
wherein the groove (11r) lies on a circular path, and wherein the groove (11r) and the depression (212) overlap.

6. Stabilizer (1) according to one of the preceding claims, wherein at least the first body (10, 210), the second body (20, 220) or the contact body (21, 30, 40) of the counterpart (22, 130, 140) is made of plastic, ceramic, metal or metal alloy.

7. Stabilizer (1) according to claim 6, wherein at least the first body (10, 210), the second body (20, 220) or the contact body (21, 30, 40) is made of steel.

8. Stabilizer (1) according to one of the preceding claims, wherein the first body (10, 210) is formed as a flat disk, a cylindrical shell or a conical shell.

9. Stabilizer (1) according to one of the preceding claims, wherein the prestressing of the counterpart (22, 130, 140) against the first body (10, 210) can be carried out by at least one wedge adjustment (300) and/or eccentric adjustment (400) and/or screw adjustment,
wherein the wedge adjustment (300) and eccentric adjustment (400) can each be carried out by means of an adjustment means (304, 308, 408) which is arranged parallel to a contact plane between the counterpart (22, 130, 140) and the first body (10, 210).

10. Headset (200) for a bicycle with a built-in stabilizer (1) according to one of claims 1 to 9.

11. Headset (200) with a built-in stabilizer (1) for a bicycle with a bicycle steering according to claim 9, wherein two positions, namely damping position and clamping position, can be selected for the adjusting means (304, 308, 408) by means of the wedge adjustment (300) or the eccentric adjustment (400), wherein for the damping position the prestressing means (100, 130, 140) is set to a predetermined prestress, and wherein for the clamping position the preloading means (100, 130, 140) is set to a higher preload than in the damping position or to the maximum prestress.

## Revendications

1. Stabilisateur (1) pour direction de vélo pour une plage d'angle de braquage prédéterminée, comprenant :
un premier corps (10, 210) avec une surface de base (11) ;
un second corps (20, 220) ayant une contrepartie (22, 130, 140) ayant des moyens de précharge;
dans lequel la contrepartie (22, 130, 140) comprend un corps de contact (21, 30, 40) avec une surface de friction (21i, 31i, 41i),
dans lequel la surface de friction (21i, 31i, 41i) de la contrepartie (22, 130, 140) fait face au premier corps (10, 210),
dans lequel le premier corps (10, 210) et le second corps (20, 220) sont montés coaxialement et rotatifs l'un par rapport à l'autre autour d'un axe (XX),
**caractérisé en ce que**
la surface de base (11) présente un évidement (12, 212) avec une surface de contact (11i),
dans lequel la surface de contact (11i) est conçue pour être au moins partiellement en contact avec la surface de friction (21i, 31i, 41i) sous une précharge prédéterminée,
et dans lequel le premier corps (10, 210) peut être fixé à un guidon ou à une fourche d'une bicyclette et le second corps (20, 220) peut être fixé au cadre de la bicyclette,
ou
dans lequel le premier corps (10, 210) est conçu comme coussinet (208, 210) d'un jeu de direction (200) et le second corps (20, 220) est conçu comme un cône (209, 220) du jeu de direction (200).

2. Stabilisateur (1) selon la revendication 1, dans lequel une largeur (30b, 40b) du corps de contact (30, 40) de la contrepartie (130, 140) est supérieure à la largeur de l'évidement (212b) et dans lequel le corps de contact (30, 40) ne peut pénétrer que partiellement dans l'évidement (212).

3. Stabilisateur (1) selon la revendication 1, dans lequel la direction d'une force exercée sur la contrepartie (22, 130, 140) pour générer la précharge prédéterminée est sensiblement perpendiculaire à la surface de base (11),
et dans lequel la force de précontrainte peut être générée au moyen d'un moyen de précontrainte et/ou au moyen d'une élasticité inhérente du premier corps (10s) et/ou du second corps (20s), dans lequel le premier corps (10s) et/ou les seconds corps (20s) sont chacun formés sous la forme d'une bande de plaque élastique.

4. Stabilisateur (1) selon l'une des revendications précédentes, dans lequel le corps de contact (21) de la contrepartie (22) est une élévation convexe (21) avec une surface de friction (21i) ou le corps de contact (30) de la contrepartie (130) présente un corps roulant une surface de friction (3li) ou le corps de contact (40) de la contrepartie (140) est un boulon avec une surface de friction (41i) est.

5. Stabilisateur (1) selon la revendication 4, dans lequel le premier corps (210) présente une rainure (11r) sur sa surface de base (11) en regard de la contrepartie (130) pour guider le corps roulant (30) de la contrepartie (130),
dans lequel la rainure (11r) se trouve sur une trajectoire circulaire, et dans lequel la rainure (11r) et l'évidement (212) se chevauchent.

6. Stabilisateur (1) selon l'une des revendications précédentes, dans lequel au moins le premier corps (10, 210), le second corps (20, 220) ou le corps de contact (21, 30, 40) de la contrepartie (22, 130, 140) en matière plastique, céramique, métal ou alliage métallique.

7. Stabilisateur (1) selon la revendication 6, dans lequel au moins le premier corps (10, 210), le second corps (20, 220) ou le corps de contact (21, 30, 40) est en acier.

8. Stabilisateur (1) selon l'une des revendications précédentes, dans lequel le premier corps (10, 210) est conçu sous la forme d'un disque plat, d'une chemise cylindrique ou d'une chemise conique.

9. Stabilisateur (1) selon l'une des revendications précédentes, dans lequel la précharge de la contrepartie (22, 130, 140) contre le premier corps (10, 210) par au moins un réglage en coin (300) et/ou un réglage excentrique (400) et/ou un réglage par vis peut être effectué, moyennant quoi
le réglage en coin (300) et le réglage excentrique (400) peuvent chacun être effectués au moyen d'un moyen de réglage (304, 308, 408) qui est disposé parallèlement à un plan de contact entre la contrepartie (22, 130, 140) et le premier corps (10, 210).

10. Jeu de direction (200) avec stabilisateur intégré (1) pour vélo à direction de vélo selon l'une des revendications 1 à 9.

11. Jeu de direction (200) avec stabilisateur intégré (1) pour vélo à direction de vélo selon la revendication 9, dans lequel pour les moyens de réglage (304, 308, 408) il y a deux positions, à savoir position d'amortissement et position de serrage par des moyens de réglage en coin (300) ou de réglage excentrique (400) peuvent être sélectionnés, les moyens de sollicitation (100, 130, 140) est réglé à une précharge prédéterminée, et dans lequel, pour la position de serrage, le moyen de précharge (100, 130, 140) est réglé à une précharge plus élevée que dans la position d'amortissement ou à la précharge maximale.
